# FASCICULE DE BREVET EUROPEEN

(11) **EP 2 564 573 B1**
(45) Date de publication et mention de la délivrance du brevet: **07.06.2017**
(21) Numéro de dépôt: 11723189.4
(22) Date de dépôt: 26.04.2011
(51) Int. Cl.: H04L 29/06, H04L 12/24, G06F 9/445, H04L 29/08

(54) **PROCÉDÉ DE MISE À NIVEAU D'UN AÉRONEF**
VERFAHREN ZUR AUFRÜSTUNG EINES FLUGZEUGS
METHOD OF UPGRADING AN AIRCRAFT

(30) Priorité: 29.04.2010 FR 1001825
(43) Date de publication de la demande: 06.03.2013
(73) Titulaire: Airbus Operations, 31060 Toulouse (FR)
(72) Inventeur: SAUGNAC, Frédéric, F-31400 Toulouse (FR)
(74) Mandataire: Santarelli
(86) Numéro de dépôt international: PCT/FR2011/000252
(87) Numéro de publication internationale: WO 2011/135203

(56) Documents cités:
- US-A1- 2003 203 734
- US-A1- 2006 010 438

## Description

La présente invention concerne un procédé de mise à niveau d'un aéronef ou d'une flotte d'aéronefs.

Dans un aéronef moderne, les équipements électroniques prennent une place très importante. Ces équipements sont gérés par des moyens logiciels chargés dans des ordinateurs qui sont reliés les uns aux autres et font partie d'un réseau d'ordinateurs à bord de l'aéronef.

Pour améliorer le niveau de sécurité de l'aéronef et/ou ses performances, les logiciels, notamment les logiciels gérant les fonctions des systèmes avioniques de l'aéronef, sont régulièrement mis à jour.

Ainsi, à la suite d'une vente d'un aéronef par un constructeur à une compagnie aérienne, cette dernière a pour obligation de faire des actions de maintenance demandées par le constructeur afin d'améliorer le niveau de sécurité de l'aéronef.

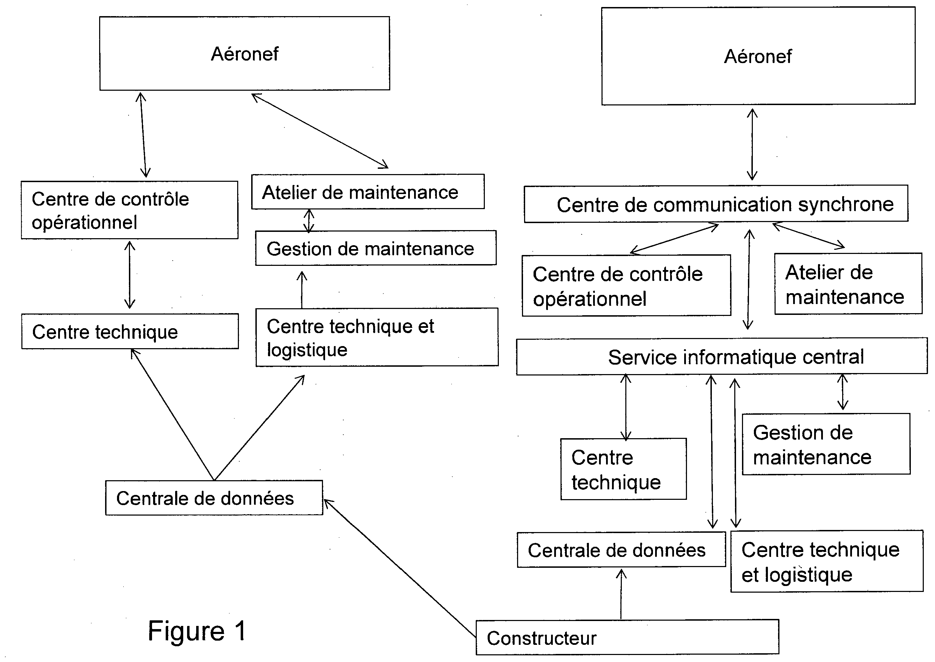

La figure 1 illustre schématiquement deux procédés permettant de réaliser une mise à niveau d'un aéronef en faisant une mise à jour de logiciels dans ledit aéronef. Généralement, le constructeur fournit une mise à jour d'un logiciel, ainsi que la documentation correspondante, à une centrale de données (appelée aussi par le terme anglais "central data center") de la compagnie aérienne ou plus généralement de l'opérateur de l'aéronef.

Sur la partie gauche de la figure 1, un premier procédé est représenté. Deux variantes de ce procédé sont mises ici en parallèle. Dans une branche, les informations sont fournies par la centrale de données à un centre technique qui les transmet par la suite à un centre de contrôle opérationnel qui délègue alors un technicien pour intervenir directement sur l'aéronef lorsque celui-ci est au sol. Les doubles flèches indiquent que le technicien informe par la suite en retour le centre de contrôle opérationnel qui en réfère alors au centre technique.

Dans l'autre branche, la procédure est sensiblement la même avec des intermédiaires différents. On trouve en effet ici un centre technique et logistique en liaison avec un service (centralisé) de gestion de maintenance de la flotte d'aéronefs qui gère plusieurs ateliers de maintenance. Un technicien d'un tel atelier est alors chargé de réaliser la mise à niveau sur l'aéronef.

L'autre variante montrée sur la figure 1 illustre un procédé dans lequel le technicien ne se déplace plus physiquement dans l'aéronef pour réaliser la mise à jour des logiciels mais cette mise à jour est réalisée à distance par l'intermédiaire d'un centre de communication synchrone. Le document FR-2 914 804 révèle un système de communication muni de moyens aptes à établir une connexion réseau entre le réseau d'ordinateurs à bord de l'aéronef et un réseau d'ordinateurs au sol qui peut être utilisé pour réaliser la mise à jour de logiciels dans l'aéronef illustrée sur cette figure 1.

Dans cette variante de réalisation, bien qu'il ne soit plus nécessaire de faire intervenir un technicien physiquement dans l'aéronef, de nombreux intermédiaires interviennent dans le processus de mise à jour des logiciels chargés à bord du réseau d'ordinateurs de l'aéronef.

Il convient en effet d'une part de transmettre parmi les divers services de la compagnie aérienne (ou autre opérateur) opérant l'aéronef et de gérer l'information reçue par le constructeur afin de réaliser le téléchargement du logiciel dans l'aéronef. Il convient en outre également de maintenir à jour toute la documentation de l'opérateur et assurer la traçabilité des opérations qui ont été réalisées.

La maintenance et la mise à niveau des aéronefs d'une flotte d'aéronefs telle que décrite ci-dessus met en oeuvre deux étapes tout à fait distinctes au niveau des responsabilités et du procédé. La première étape est gérée par le constructeur de l'aéronef. Celui-ci décide d'une évolution nécessaire des aéronefs qu'il a construits. Il développe l'évolution de la solution trouvée et la certifie auprès des autorités de certification. Le constructeur démontre ainsi que la nouvelle configuration proposée est compatible avec l'environnement et la configuration des aéronefs auxquels l'évolution est destinée.

Une fois la solution développée et validée, le constructeur prépare un pack, appelé service bulletin, contenant d'une part une description des opérations à conduire pour réaliser l'évolution de l'aéronef ainsi qu'un élément physique contenant le logiciel à changer et d'autre part une documentation correspondante. L'élément physique contenant le logiciel dépend de la taille du logiciel et il s'agit par exemple d'une clé USB ("Universal Serial Bus" en terminologie anglo-saxonne), un CD/DVD, .... Ce pack est livré physiquement à la société qui opère l'aéronef concerné. Cette livraison peut également être réalisée par voie électronique.

La seconde étape est réalisée sous la responsabilité de l'opérateur de l'aéronef, par exemple une compagnie aérienne, ou, lorsque l'aéronef est en maintenance lourde sous la responsabilité de l'organisation de maintenance habilitée à le faire. De même, cette étape peut être réalisée par une organisation de maintenance habilitée (appelé MRO pour Maintenance Repair Organization soit en français service de maintenance et réparation) lorsque l'aéronef est transformé pour un changement de l'opérateur. Cela est typique du cas d'un loueur d'aéronefs.

L'opérateur reçoit le service bulletin et le transfère à un centre technique (figure 1) afin que l'opérateur affecte et vérifie la compatibilité du service bulletin reçu à l'environnement des aéronefs de sa flotte. Une fois les vérifications effectuées et le service bulletin validé, une demande de travail est envoyée au service de gestion de la maintenance de la flotte de l'opérateur. Ce service définit alors les moments (escale, visite de maintenance lourde, ...) où l'aéronef peut subir cette mise à niveau et met en magasin l'élément logiciel à installer sur l'aéronef (clé USB, DVD, ...).

Un atelier de maintenance de la compagnie aérienne ou d'une organisation de maintenance effectue la tâche demandée et télécharge le logiciel qui est dans le DVD ou la clé USB (ou tout autre support). L'action est enregistrée et le référentiel de configuration de l'aéronef est mis à niveau. Bien entendu, le centre technique (et éventuellement d'autres services concernés) est tenu informé de la mise à niveau qui vient d'être réalisée.

La mise à niveau est réalisée sur l'ensemble de la flotte de l'opérateur. En parallèle, il convient également de mettre à jour la documentation de l'aéronef au sol et/ou à bord de l'aéronef.

Un tel processus, tel que décrit ci-dessus et illustré schématiquement sur la figure 1 présente de nombreux inconvénients.

Un premier inconvénient résulte d'une difficulté de coordination entre l'opérateur de l'aéronef et le constructeur. Un retard dans la mise à niveau de l'aéronef est constaté lorsque l'opérateur tarde à l'installer. Il peut en effet arriver que les mises à niveau tardent à être installées par l'opérateur de l'aéronef après réception du service bulletin.

Des tâches similaires doivent être réalisées par le constructeur et par l'opérateur de l'aéronef. Deux personnes distinctes sont ainsi appelées à réaliser une même tâche pour une mise à niveau. Le constructeur doit notamment s'assurer des compatibilités des services bulletins proposés en fonction des configurations connues des aéronefs. Toutefois, le constructeur ne connaît pas exactement les configurations des aéronefs de l'opérateur et ce dernier n'a aucune obligation à faire connaître les configurations de ses aéronefs au constructeur. De ce fait, le constructeur doit faire un premier travail d'analyse, puis le centre technique de l'opérateur est amené à refaire le même travail.

Le coût de la structure à mettre en oeuvre pour pouvoir réaliser les mises à niveau demandées par le constructeur est important pour les compagnies aériennes (opérateurs). Des équipes importantes des compagnies aériennes doivent en effet être dédiées à la gestion des configurations des aéronefs de la flotte gérée par la compagnie.

Il arrive fréquemment que plusieurs mises à jour de logiciels soient à faire en parallèle. Le constructeur ne peut pas coordonner l'ensemble de ses fournitures aux compagnies aériennes. Ceci est alors une source de perte d'efficacité pour l'opérateur.

Dans les aéronefs, on a un nombre toujours croissant de mises à niveau à réaliser. En outre, dans le cas de la reconfiguration d'un aéronef pour un changement d'opérateur, bien souvent, l'organisation en charge de la reconfiguration de l'aéronef recalcule et définit la configuration à atteindre déjà faite par le constructeur. À titre d'exemple illustratif, un aéronef de la génération des aéronefs commercialisés sous la marque déposée Airbus A340 comporte quelques dizaines de logiciels téléchargeables exclusivement avec un outil de téléchargement portable et avec un opérateur à bord. Les opérations de maintenance de la flotte peuvent dans ce cas se faire uniquement pendant les escales ou lors des visites de maintenance des aéronefs lorsque ceux-ci sont immobilisés. Par contre, dans des aéronefs de nouvelle génération (par exemple commercialisés sous la marque déposée Airbus A380 ou Airbus A350), on trouve plus de mille logiciels incluant par exemple les systèmes cabines et les systèmes opérationnels. Afin de réduire les coûts de maintenance par les compagnies aériennes (ou autres) opérant ces aéronefs, ceux-ci sont équipés de solutions sans fil permettant de télécharger à distance des logiciels de mise à jour. Les logiciels pouvant être mis à jour sont de deux sortes :
- soit des bases de données documentaires à mettre à jour régulièrement et suivant des cycles définis entièrement sous la responsabilité de l'opérateur,
- soit des logiciels, appelés logiciels aéronefs, qui sont mis à jour à la demande du constructeur ou de l'opérateur (compagnie aérienne) pour augmenter les performances et/ou la sécurité de l'aéronef. Dans les deux cas, les modifications de la configuration de l'aéronef ne peuvent être faites sans l'accord du constructeur qui met à disposition un service bulletin à la disposition de l'opérateur contenant le logiciel à remplacer ainsi que les documents associés.

On connait également la publication US2006/010438 qui décrit un procédé de mise à niveau de la configuration logicielle d'ordinateurs *(Line-Replaceable Unit* LRU *computers* en anglais) de divertissement (*In-Flight Entertainment System* IFES en anglais) à partir d'un serveur de téléchargement.

La présente invention a alors pour but de fournir un procédé permettant d'optimiser la mise à niveau d'un aéronef. De préférence, un tel procédé permettra de réaliser des économies en diminuant le coût des opérations de mise à niveau. Il convient ici de mettre à niveau des logiciels différents qui sont utilisés pour la gestion de systèmes différents les uns des autres en veillant à ne pas avoir d'incompatibilités entre ces nombreux logiciels.

À cet effet, la présente invention propose un procédé tel que défini dans la revendication 1.
Un tel procédé de mise à jour ou de mise à niveau d'un aéronef comprenant un réseau d'ordinateurs à bord de l'aéronef et un système avionique, des logiciels étant chargés sur des ordinateurs du réseau d'ordinateurs à bord de l'aéronef notamment pour la gestion du système avionique, comporte les étapes suivantes :
- interrogation des ordinateurs du réseau d'ordinateurs à bord de l'aéronef pour connaître la configuration desdits logiciels chargés dans les ordinateurs du réseau d'ordinateurs à bord de l'aéronef,
- analyse par au moins un ordinateur de ladite configuration,
- identification des logiciels pour lesquels il existe une version plus récente que la version chargée sur le réseau d'ordinateurs à bord de l'aéronef,
- calcul par un ordinateur au sol d'une nouvelle configuration logicielle pour l'aéronef,
- construction d'un ensemble de logiciels, intégrant des logiciels mis à jour et correspondant à une version plus récente d'un logiciel chargé dans les ordinateurs du réseau d'ordinateurs à bord de l'aéronef,
- chargement sur le réseau d'ordinateurs à bord de l'aéronef dudit ensemble de logiciels pour obtenir à bord de l'aéronef la nouvelle configuration.

Ces étapes successives permettent d'optimiser très sensiblement une opération de mise à niveau car la mise à jour de chaque logiciel est ici réalisée en connaissant toutes les versions des logiciels à bord de l'aéronef. Si le constructeur lui-même réalise la mise à niveau de l'aéronef, comme il connaît mieux que quiconque d'une part l'aéronef et d'autre part les logiciels chargés à bord de l'aéronef dans toutes leurs versions, la nouvelle configuration chargée dans l'aéronef peut être optimisée et on peut ainsi éviter des coûts à l'opérateur gérant l'aéronef. Ces mises à jour peuvent aussi être installées plus rapidement après leur validation par les autorités de certification.

Le système avionique est considéré ici comme étant un ensemble de dispositifs électroniques, y compris des éléments électriques associés, destinés à être utilisés à bord d'un aéronef en lien avec le pilotage de l'aéronef. Un tel système avionique comporte notamment des circuits radio, des circuits automatiques de commandes de vol, l'instrumentation de bord, etc.. La présente invention concerne avant tout la mise à jour des logiciels gérant les différents éléments du système avionique mais aussi éventuellement la gestion d'équipements de confort des passagers (éclairage, climatisation, ...).

En outre, les différentes étapes proposées par la présente invention peuvent être réalisées au sol. On entend ici que ces opérations ne sont pas réalisées à bord de l'aéronef. Le plus souvent, ces opérations seront réalisées dans des bureaux d'un service technique du constructeur de l'aéronef.

Dans le procédé décrit ci-dessus, on prévoit de préférence, à la fin, une étape de génération d'un rapport de configuration attestant la mise à jour de l'aéronef. Un tel rapport permet d'assurer la traçabilité des opérations qui ont été réalisées. Un tel rapport sera par la suite par exemple archivé par le constructeur et par l'opérateur de l'aéronef.

Selon une forme de réalisation préférée d'un procédé selon l'invention, parallèlement à la construction d'un ensemble de logiciels, une documentation mise à jour correspondante est établie. Cette documentation est de préférence envoyée à bord de l'aéronef en même temps que l'ensemble de logiciels mis à jour.

Pour réaliser la mise à niveau selon l'invention à distance, le procédé de mise à niveau d'un aéronef met avantageusement en oeuvre un système de communication comprenant des moyens aptes à établir une connexion réseau entre un réseau d'ordinateurs à bord de l'aéronef et un réseau d'ordinateurs au sol via au moins un support de communication. Un tel système de communication est par exemple décrit dans le document FR-2 914 804. De préférence, le système de communication est un système de communication sans fil entre l'aéronef et le réseau d'ordinateurs au sol afin de permettre de réaliser la mise à niveau à distance, voire lorsque l'aéronef est en vol.

Lorsqu'un système de communication entre le sol et l'aéronef est prévu, l'interrogation des ordinateurs du réseau d'ordinateurs à bord de l'aéronef pour connaître la configuration de logiciels chargés dans les ordinateurs du réseau d'ordinateurs à bord de l'aéronef est avantageusement réalisée à distance à l'aide du système de communication. Ce dernier peut également être utilisé afin que la configuration obtenue suite à l'interrogation des ordinateurs du réseau d'ordinateurs à bord de l'aéronef soit transmise à un ordinateur du réseau d'ordinateurs au sol et/ou que le chargement de la nouvelle configuration sur les ordinateurs du réseau d'ordinateurs à bord de l'aéronef soit réalisé à partir d'au moins un ordinateur du réseau d'ordinateurs au sol.

L'analyse par au moins un ordinateur de la configuration des logiciels est par exemple réalisée par un ordinateur extérieur à l'aéronef.

Pour bénéficier au mieux des moyens mis en oeuvre pour la mise à jour des logiciels embarqués, le procédé de mise à niveau selon l'invention prévoit avantageusement qu'une documentation correspondant à la nouvelle configuration chargée sur le réseau d'ordinateurs à bord de l'aéronef soit chargée à bord de l'aéronef.

D'autres avantages, buts et caractéristiques de la présente invention ressortent de la description détaillée qui suit, faite à titre d'exemple non limitatif, au regard des dessins annexés dans lesquels :
- la figure 1 illustre des opérations de mise à niveau réalisées dans un aéronef selon l'état de la technique,
- la figure 2 illustre une vue globale d'un système utilisé pour la mise en oeuvre de l'invention, et
- la figure 3 illustre des opérations réalisées pour la mise à niveau d'un aéronef selon l'invention.

Conformément à l'invention, il est prévu pour un aéronef un système de mise à niveau électronique apte à réaliser des opérations de mise à jour de logiciels de manière notamment à remplacer une configuration logicielle chargée à bord de l'aéronef par une configuration correspondant à une version plus récente par un processus électronique.

Ce système de mise à niveau s'appuie sur une infrastructure de bord dans un aéronef, c'est-à-dire un système avionique comprenant notamment un ensemble d'entités fonctionnelles de l'aéronef, notamment des entités commandées par des moyens logiciels, appelés par la suite "logiciels". Ces entités fonctionnelles sont destinées tout d'abord au pilotage et à la sécurité de l'aéronef mais peuvent concerner également le confort des passagers (gestion par exemple de l'éclairage et de la climatisation dans la cabine). Dans la description qui suit, il est également prévu une infrastructure au sol pour préparer et mettre à jour les logiciels devant être utilisés à bord et une infrastructure de connexion pour échanger des données entre l'infrastructure au sol et l'infrastructure de bord et pour mettre à jour les outils et les données mémorisées dans l'infrastructure de bord.

L'infrastructure au sol est, par exemple, présente dans un centre technique du constructeur de l'aéronef.

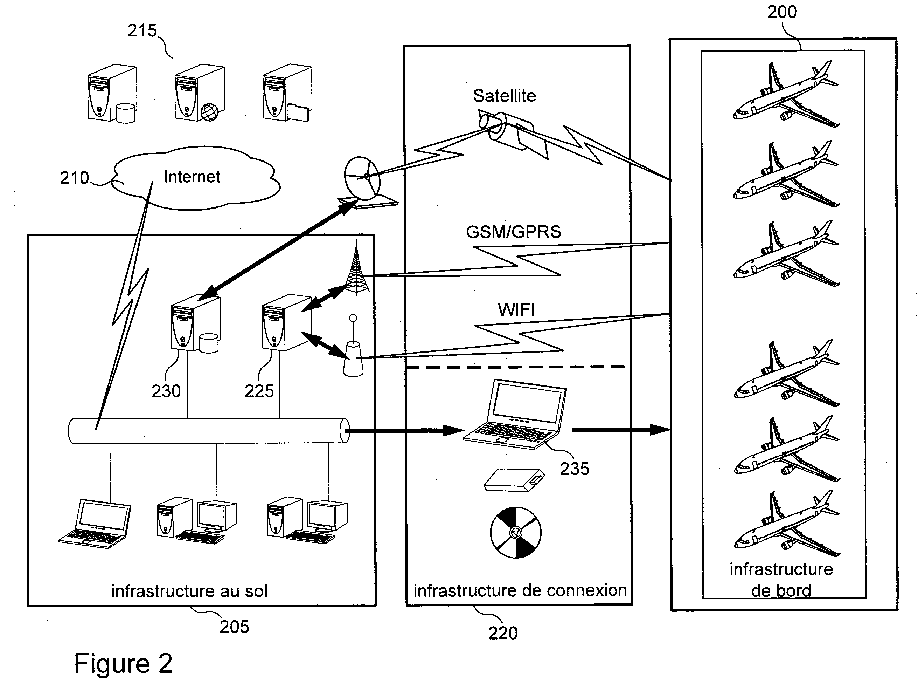

La figure 2 illustre une vue globale d'un système pouvant être utilisé par un procédé selon l'invention.

Ainsi, il est représenté un ensemble d'aéronefs 200 correspondant à un type d'aéronefs construits par un constructeur aéronautique et une infrastructure au sol 205 de ce constructeur. Chaque aéronef de l'ensemble d'aéronefs 200 comprend une infrastructure de bord comportant notamment un réseau d'ordinateurs de bord dans lesquels sont chargés des logiciels permettant une gestion électronique du système avionique de l'aéronef correspondant. L'infrastructure au sol 205 comprend notamment un ensemble d'unités de traitement interconnectées via un réseau de télécommunication. Ce réseau comprend également une connexion 210, par exemple une connexion Internet, afin d'être connecté à des serveurs 215 d'un service technique centralisé du constructeur.

L'infrastructure au sol 205 est également connectée via un réseau de communication 220 (infrastructure de connexion) au réseau d'ordinateurs à bord de chacun des aéronefs. Le réseau de communication 220 s'appuie par exemple sur un support de communication sans fil, par exemple WiFi, un support de communication de téléphonie mobile par exemple GSM / GPRS ou un support de communication satellite. En outre, un aéronef peut être raccordé au sol par une liaison filaire en dépannage en cas d'indisponibilité de la communication radio.

Ainsi le réseau de l'infrastructure au sol comprend notamment un serveur 225 apte à émettre des données à un aéronef et à recevoir des données d'un aéronef par satellite, et un serveur 230 apte à émettre des données à un aéronef et à recevoir des données d'un aéronef en utilisant un support de communication sans fil ou de téléphonie mobile.

En outre, il peut être utilisé un support portable 235, tel qu'un ordinateur portable, une clé USB ("Universal Serial Bus" en terminologie anglo-saxonne), un CD / DVD, afin d'échanger des données avec l'aéronef.

Ainsi, conformément à l'invention, l'infrastructure de l'aéronef est un réseau mobile apte à communiquer avec l'infrastructure au sol du constructeur de sorte à créer une continuité entre l'infrastructure de bord et l'infrastructure au sol.

Selon un mode de réalisation particulier, l'infrastructure de bord communique avec l'infrastructure au sol selon un mode de communication synchrone. L'infrastructure de l'aéronef devenant une continuité de l'infrastructure au sol, il est possible de réaliser des mises à jour de manière synchrone entre le sol et le bord.

Avec un tel système, un technicien du service technique du constructeur aéronautique peut mettre à jour les logiciels et les données dans l'aéronef depuis le sol, opération aussi appelée mise à jour distante ("remote update" en terminologie anglo-saxonne).

Selon un mode de réalisation particulier, il est créé, sur un support de communication entre l'infrastructure de bord et l'infrastructure au sol, notamment sur un réseau sans fils ou sur un réseau de téléphonie mobile, un protocole d'encapsulation aussi appelé tunnelisation ("*tunneling*" en terminologie anglo-saxonne), apte à encapsuler les données à transmettre de façon chiffrée. Ce réseau créé est appelé réseau privé virtuel (noté *RPV* ou VPN, acronyme de "*Virtual Private Network*")*.* Ce réseau est dit virtuel car il relie deux réseaux physiques par un support de communication non nécessairement fiable, et privé car seuls les ordinateurs des réseaux de part et d'autre du réseau privé virtuel peuvent accéder aux données. De plus, il permet la sécurisation des échanges sur le support de communication non nécessairement fiable.

De cette manière, il est créé une liaison sécurisée à moindre coût.

Un système tel que décrit est utilisé pour la mise en oeuvre d'un procédé selon la présente invention.

Selon ce procédé, il est réalisé à une mise à jour de logiciels à bord de l'aéronef coordonnée avec la mise à jour de la documentation opérationnelle et de maintenance afin notamment d'augmenter la sécurité de l'aéronef et/ou ses performances.

Lorsqu'une nouvelle version d'un logiciel est mise au point par le constructeur aéronautique, par exemple dans le service technique centralisé du constructeur, le serveur 215 transmet cette nouvelle version à l'infrastructure au sol 205. Cette nouvelle version du logiciel peut alors être téléchargée sur tous les aéronefs de l'ensemble d'aéronefs 200. On considérera par la suite la mise à jour logicielle d'un seul aéronef de l'ensemble d'aéronefs 200.

L'infrastructure au sol 205 interroge par l'intermédiaire de l'infrastructure de connexion 220 les ordinateurs du réseau d'ordinateurs à bord de l'aéronef pour connaître la configuration des logiciels chargés dans les ordinateurs du réseau d'ordinateurs à bord de l'aéronef. Dans les aéronefs modernes, un très grand nombre d'équipements sont gérés par des logiciels et la configuration issue de cette interrogation concerne donc un grand nombre de.logiciels distincts.

La configuration de l'aéronef, c'est-à-dire essentiellement l'indication pour chaque logiciel de sa version, est transmise en retour par l'intermédiaire de l'infrastructure de connexion 220 au réseau d'ordinateurs au sol (infrastructure au sol 205).

Un ordinateur, qui peut se trouver par exemple au niveau de l'infrastructure au sol 205 mais qui peut aussi être un ordinateur du service technique centralisé du constructeur, analyse la configuration de l'aéronef.

Cette analyse permet ensuite l'identification des logiciels pour lesquels il existe une version plus récente que la version chargée sur le réseau d'ordinateurs à bord de l'aéronef et correspondant à la configuration transmise.

Une nouvelle configuration pour l'aéronef intégrant des logiciels mis à jour peut alors être déterminée. Cette nouvelle configuration ne concerne pas uniquement tel ou tel outil de l'aéronef mais tous les outils à bord de l'aéronef. Il est ainsi possible d'assurer la compatibilité de tous les logiciels de cette nouvelle configuration. Cette dernière, une fois compilée, est téléchargée à bord de l'aéronef. Ici aussi, dans une forme de réalisation préférée, l'infrastructure de connexion 220 est utilisée pour réaliser, par une connexion sans fil, le téléchargement de cette nouvelle configuration. Les logiciels à bord de l'aéronef sont ainsi mis à jour et la mise à niveau de l'aéronef est achevée lorsque ces mises à jour sont réalisées.

Parallèlement et simultanément à la mise à jour des logiciels dans l'aéronef, la mise à jour correspondante de la documentation peut se faire. La documentation à bord de l'aéronef est mise à jour et la nouvelle version de la documentation est communiquée à la compagnie aérienne qui opère l'aéronef.

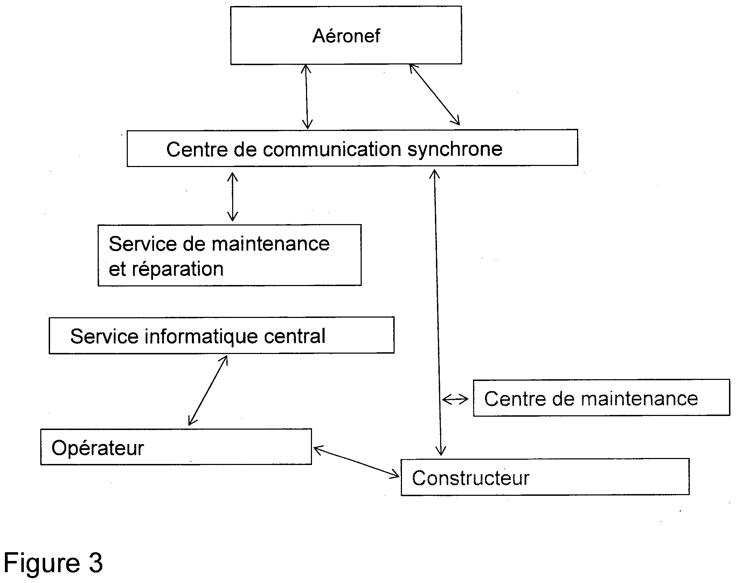

La mise en oeuvre de ce procédé selon l'invention est réalisée avantageusement par le constructeur des aéronefs concernés, qui est le seul à avoir une bonne maîtrise de toutes les versions des logiciels chargés dans l'infrastructure à bord des aéronefs. Toutefois, il est clair que la mise à jour est réalisée en accord et avec la collaboration de la société, par exemple une compagnie aérienne, qui opère l'aéronef et appelée dans la suite de la présente description l'opérateur. Ce procédé permet ainsi de créer une réelle activité partagée et collaborative entre le constructeur d'une part et l'opérateur d'autre part comme expliqué ci-après et illustré sur la figure 3.

Cette collaboration permet d'optimiser et de coordonner les décisions de mise à niveau d'une flotte complète d'aéronefs.

Le procédé selon l'invention permet également de personnaliser le service pour un opérateur. Selon les cahiers des charges des opérateurs, les logiciels chargés dans deux aéronefs de même type peuvent varier selon l'opérateur gérant l'aéronef.

L'opérateur peut, grâce à l'invention, limiter ses équipes techniques en supprimant notamment les doubles tâches de traitement des services bulletins qui sont réalisées dans l'art antérieur (par le constructeur et par l'opérateur).

Le procédé selon l'invention optimise en outre l'implémentation des mises à niveau relatives à la sécurité et augmente la sécurité des opérations de mise à niveau.

Toutes les opérations réalisées lors de la mise à jour des logiciels à bord de l'aéronef le sont bien entendu en respectant la réglementation.

Les mises à jour logicielles des aéronefs modernes étant dématérialisées, il est possible que ces mises à jour soient organisées et gérées directement par le constructeur sous la supervision de l'opérateur afin de respecter les règlementations en vigueur. En outre les aéronefs modernes comportent des moyens de communications modernes embarqués (Satcom SBB/ UMTS Gatelink) qui permettent d'interagir directement comme décrit plus haut, que l'aéronef soit en vol ou au sol. Grâce à ses moyens de communication, le constructeur peut demander des informations à l'aéronef et les recevoir en temps quasi réel.

Le procédé décrit précédemment peut alors été revu avec un très haut niveau d'interactivité entre le constructeur, l'opérateur d'une flotte et les aéronefs, comme expliqué ci-après.

Le constructeur identifie une demande de mise à niveau venant de l'opérateur ou d'une décision de mise à jour d'un logiciel de sa part. Il a directement accès d'un côté à la connaissance des configurations des aéronefs de l'opérateur grâce au dispositif de communication sécurisé décrit ci-dessus et sait d'un autre côté quelle est la configuration à atteindre.

Le constructeur peut donc préparer un lot (ou "batch" en anglais) personnalisé pour l'opérateur et l'informer qu'il y a un lot de logiciels à implémenter sur sa flotte d'aéronefs.

Le constructeur peut aussi faire différents lots afin d'adapter la mise à jour de configuration à chacun des aéronefs.

Sur proposition du constructeur, l'opérateur a seulement à vérifier la qualité des données utilisées par le constructeur pour la définition de son service bulletin et à accepter le lot préparé par le constructeur ou à demander une modification du contenu de ce lot.

Après acceptation du lot de mise à jour, le constructeur peut enclencher les opérations de chargement de la nouvelle configuration correspondant aux lots approuvés par l'opérateur à bord des aéronefs concernés en accord avec le service de maintenance si nécessaire. Lorsque la nouvelle configuration, formée par le lot de logiciels mis à jour, est chargée à bord de l'aéronef, il convient de les télécharger dans l'équipement à mettre à jour, ce qui peut être fait, suivant les accords, soit par l'opérateur, soit par le constructeur.

Lorsque le système à bord de l'aéronef est à niveau, la même opération automatique permet de mettre à jour la documentation aéronef associée que celle-ci soit à bord et/ou centralisée au sol.

Après réalisation des deux opérations (mise à jour de la documentation et du système (logiciel) aéronef), un rapport de configuration est émis vers l'opérateur et le constructeur.

Ce principe de gestion de la mise à niveau de la flotte par le constructeur permet de :
- maîtriser de façon opérationnelle et coopérative la mise à niveau des flottes et permettre des mises à niveau plus rapides et dans le monde entier des flottes d'aéronefs,
- réduire les coûts de structure de l'opérateur en simplifiant le travail d'ingénierie,
- optimiser le travail de définition des services bulletins pour le constructeur,
- coordonner la mise à niveau de l'aéronef et la mise à jour de la documentation correspondante,
- simplifier et optimiser les tâches de mise à niveau de la flotte,
- optimiser l'organisation des chantiers et visite de maintenance avec les livraisons des lots de mises à niveau par le constructeur.

Les clients de loueurs d'aéronefs demandent souvent à leurs loueurs d'avoir rapidement un aéronef à disposition. Toutefois, lorsque le loueur récupère un aéronef à l'issue d'un contrat de location, il est nécessaire d'effectuer une reconfiguration de cet aéronef pour le louer à un autre client afin que l'aéronef soit conforme aux exigences du nouveau client.

Une telle reconfiguration d'un aéronef pour pouvoir être opérée par une nouvelle compagnie aérienne (un nouveau client pour le loueur) nécessite des opérations fastidieuses d'ingénierie et également un travail sur aéronef (reconfiguration) effectué le plus souvent en sous-traitance chez un prestataire spécialisé en maintenance et réparation d'aéronefs. En outre, les aéronefs de nouvelle génération gérés essentiellement par des logiciels nécessitent de multiples outils informatiques au sol pour gérer les opérations de chargement de données et de mise à niveau des flottes.

Lorsqu'un loueur met à disposition un aéronef auprès d'un client, une compagnie aérienne le plus souvent, ce peut être pour une période réduite de l'ordre de quelques mois. Dans un tel cas, l'opérateur ne souhaite pas généralement avoir à intervenir sur l'aéronef autrement que pour faire des réparations de pannes. Dans ce cadre, des visites de maintenance programmées sont réduites au minimum. Si l'aéronef est équipé pour la mise en oeuvre du procédé selon la présente invention décrite ci-dessus, ceci devient un réel avantage.

En effet le service de maintenance et de réparation, ou le loueur, peut directement commander une reconfiguration complète au constructeur puis ensuite demander au constructeur de faire les opérations de mise à niveau à distance durant l'exploitation de la flotte où que ce soit dans le monde en s'appuyant sur les réseaux aéronautiques privés. Le constructeur peut alors offrir une prestation fiable et sure de définition et téléchargement du lot logiciel permettant de reconfigurer l'aéronef sans nécessiter de travail supplémentaire au service de maintenance et de réparation et sans obliger l'opérateur à déployer toute la chaîne d'outils sol permettant d'assurer la mise à jour logicielle de la flotte ainsi que la mise à jour de la documentation y compris durant son exploitation.

Dans le cadre d'aéronefs appartenant à des sociétés de location d'aéronefs, le procédé selon la présente invention permet d'une part une mise à disposition de la définition des aéronefs reconfigurés de façon rapide et fiable aux services de maintenance et de réparation puis aux opérateurs et d'autre part une augmentation de la sécurité des aéronefs en maîtrisant les activités de reconfiguration (définition des services bulletins) et d'assurer la maintenance au cours de l'exploitation en la déléguant au constructeur.

La présente invention ne se limite pas aux formes de réalisation d'un procédé décrites ci-dessus. Elle concerne également les variantes de réalisation à la portée de l'homme du métier dans le cadre des revendications ci-après.

## Revendications

1. Procédé de mise à jour d'un aéronef comprenant un réseau d'ordinateurs à bord de l'aéronef et un système avionique comprenant un ensemble d'entités fonctionnelles commandées par des logiciels, ces logiciels étant chargés sur des ordinateurs du réseau d'ordinateurs à bord de l'aéronef notamment pour la gestion du système avionique, **caractérisé en ce qu'**il comporte les étapes suivantes :
- interrogation des ordinateurs du réseau d'ordinateurs à bord de l'aéronef pour connaître la configuration logicielle desdits logiciels chargés dans les ordinateurs du réseau d'ordinateurs à bord de l'aéronef, ladite configuration logicielle comprenant, pour chaque logiciel, une indication de la version dudit logiciel,
- réception et analyse par au moins un ordinateur d'une infrastructure au sol, de ladite configuration logicielle,
- identification, à partir de l'analyse, des logiciels pour lesquels il existe, dans l'infrastructure au sol, une version plus récente des logiciels que la version de ces logiciels chargée sur le réseau d'ordinateurs à bord de l'aéronef et comprise dans la configuration logicielle reçue,
- calcul, par un ordinateur de l'infrastructure au sol, d'une nouvelle configuration logicielle pour l'aéronef, à partir des logiciels identifiés,
- construction d'un ensemble de logiciels, intégrant les logiciels identifiés comme correspondant à une version plus récente d'un logiciel chargé dans les ordinateurs du réseau d'ordinateurs à bord de l'aéronef, lesdits logiciels gérant les différentes entités fonctionnelles du système avionique,
- chargement sur le réseau d'ordinateurs à bord de l'aéronef et depuis l'infrastructure au sol, dudit ensemble de logiciels pour obtenir à bord de l'aéronef la nouvelle configuration logicielle.

2. Procédé de mise à jour d'un aéronef selon la revendication 1, **caractérisé en ce qu'**il comporte en outre à la fin une étape de génération d'un rapport de configuration attestant la mise à jour de l'aéronef.

3. Procédé de mise à jour d'un aéronef selon l'une des revendications 1 ou 2, **caractérisé en ce que** parallèlement à la construction d'un ensemble de logiciels, une documentation mise à jour correspondante est établie.

4. Procédé de mise à jour d'un aéronef selon l'une des revendications 1 à 3, **caractérisé en ce qu'**il met en oeuvre un système de communication comprenant des moyens aptes à établir une connexion réseau entre un réseau d'ordinateurs à bord de l'aéronef et un réseau d'ordinateurs au sol via au moins un support de communication.

5. Procédé de mise à jour selon la revendication 4, **caractérisé en ce que** le système de communication est un système de communication sans fil entre l'aéronef et le réseau d'ordinateurs au sol.

6. Procédé de mise à jour selon l'une des revendications 4 ou 5, **caractérisé en ce que** l'interrogation des ordinateurs du réseau d'ordinateurs à bord de l'aéronef pour connaître la configuration de logiciels chargés dans les ordinateurs du réseau d'ordinateurs à bord de l'aéronef est réalisée à distance à l'aide du système de communication.

7. Procédé de mise à jour selon l'une des revendications 4 à 6, **caractérisé en ce que** la configuration obtenue suite à l'interrogation des ordinateurs du réseau d'ordinateurs à bord de l'aéronef est transmise par le système de communication à un ordinateur du réseau d'ordinateurs au sol.

8. Procédé de mise à jour selon l'une des revendications 4 à 7, **caractérisé en ce que** le chargement de la nouvelle configuration sur les ordinateurs du réseau d'ordinateurs à bord de l'aéronef est réalisé à partir d'au moins un ordinateur du réseau d'ordinateurs au sol par l'intermédiaire du système de communication.

9. Procédé de mise à jour selon l'une des revendications 1 à 8, **caractérisée en ce que** l'analyse par au moins un ordinateur de la configuration des logiciels est réalisée par un ordinateur extérieur à l'aéronef.

10. Procédé de mise à jour selon l'une des revendications 1 à 9, **caractérisé en ce qu'**une documentation correspondant à la nouvelle configuration chargée sur le réseau d'ordinateurs à bord de l'aéronef est chargée à bord de l'aéronef.

## Patentansprüche

1. Verfahren zum Aktualisieren eines Flugzeugs, das ein Computernetz an Bord des Flugzeugs und ein Avioniksystem, das eine Anordnung funktionaler Entitäten enthält, die durch Softwareanwendungen gesteuert werden, umfasst, wobei diese Softwareanwendungen in die Computer des Computernetzes an Bord des Flugzeugs insbesondere für die Steuerung des Avioniksystems geladen werden, **dadurch gekennzeichnet, dass** es die folgenden Schritte umfasst:
- Abfragen der Computer des Computernetzes an Bord des Flugzeugs, um die Softwarekonfiguration der in die Computer des Computernetzes an Bord des Flugzeugs geladenen Softwareanwendungen zu kennen, wobei diese Softwarekonfiguration für jede Softwareanwendung eine Angabe der Version dieser Softwareanwendung enthält,
- Empfangen und Analysieren einer Infrastruktur auf dem Boden der Softwarekonfiguration durch wenigstens einen Computer,
- Identifizieren anhand der Analyse jener Softwareanwendungen, für die in der Infrastruktur auf dem Boden eine neuere Version der Softwareanwendungen als die Version dieser Softwareanwendungen, die in das Computernetz an Bord des Flugzeugs geladen sind und die in der empfangenen Softwarekonfiguration enthalten sind, vorhanden ist,
- Berechnen durch einen Computer der Infrastruktur auf dem Boden einer neuen Softwarekonfiguration für das Flugzeug anhand der identifizierten Softwareanwendungen,
- Konstruieren einer Gesamtheit von Softwareanwendungen, die die Softwareanwendungen integriert, für die bestimmt worden ist, dass sie einer neueren Version einer Softwareanwendung entsprechen, die in die Computer des Computernetzes an Bord des Flugzeugs geladen ist, wobei die Softwareanwendungen die verschiedenen funktionalen Entitäten des Avioniksystems steuern,
- Laden in das Computernetz an Bord des Flugzeugs und von der Infrastruktur auf dem Boden der Gesamtheit von Softwareanwendungen, um an Bord des Flugzeugs die neue Softwarekonfiguration zu erhalten.

2. Verfahren zum Aktualisieren eines Flugzeugs nach Anspruch 1, **dadurch gekennzeichnet, dass** es außerdem am Ende einen Schritt des Erzeugens eines Konfigurationsberichts, der die Aktualisierung des Flugzeugs bestätigt, umfasst.

3. Verfahren zum Aktualisieren eines Flugzeugs nach einem der Ansprüche 1 oder 2, **dadurch gekennzeichnet, dass** parallel zum Konstruieren eine Gesamtheit von Softwareanwendungen eine entsprechende Aktualisierungsdokumentation erstellt wird.

4. Verfahren zum Aktualisieren eines Flugzeugs nach einem der Ansprüche 1 bis 3, **dadurch gekennzeichnet, dass** es ein Kommunikationssystem verwendet, das Mittel enthält, die dafür ausgelegt sind, eine Netzverbindung zwischen einem Computernetz an Bord des Flugzeugs und einem Computernetz auf dem Boden über wenigstens einen Kommunikationsträger aufzubauen.

5. Aktualisierungsverfahren nach Anspruch 4, **dadurch gekennzeichnet, dass** das Kommunikationssystem ein drahtloses Kommunikationssystem zwischen den Flugzeug und dem Computernetz auf dem Boden ist.

6. Aktualisierungsverfahren nach einem der Ansprüche 4 oder 5, **dadurch gekennzeichnet, dass** das Abfragen der Computer des Computernetzes an Bord des Flugzeugs um die Konfiguration von Softwareanwendungen zu kennen, die in die Computer des Computernetzes an Bord des Flugzeugs geladen sind, mit Hilfe des Kommunikationssystems aus der Ferne ausgeführt wird.

7. Aktualisierungsverfahren nach einem der Ansprüche 4 bis 6, **dadurch gekennzeichnet, dass** die Konfiguration, die nach dem Abfragen der Computer des Computernetzes an Bord des Flugzeugs erhalten wird, durch das Kommunikationssystem an einen Computer des Computernetzes auf dem Boden übertragen wird.

8. Aktualisierungsverfahren nach einem der Ansprüche 4 bis 7, **dadurch gekennzeichnet, dass** das Laden der neuen Konfiguration in die Computer des Computernetzes an Bord des Flugzeugs anhand wenigstens eines Computers des Computernetzes auf dem Boden über das Kommunikationssystem ausgeführt wird.

9. Aktualisierungsverfahren nach einem der Ansprüche 1 bis 8, **dadurch gekennzeichnet, dass** die Analyse durch wenigstens einen Computer der Konfiguration der Softwareanwendungen durch einen Computer außerhalb des Flugzeugs ausgeführt wird.

10. Aktualisierungsverfahren nach einem der Ansprüche 1 bis 9, **dadurch gekennzeichnet, dass** eine Dokumentation, die der in das Computernetz an Bord des Flugzeugs geladenen neuen Konfiguration entspricht, an Bord des Flugzeugs geladen wird.

## Claims

1. A method of updating an aircraft comprising a network of computers on board the aircraft and an avionic system comprising a set of functional entities controlled by software applications, these software applications being loaded onto computers of the network of computers on board the aircraft in particular for the management of the avionic system, **characterised in that** it comprises the following steps:
- interrogating the computers of the network of computers on board the aircraft to know the software configuration of said software applications loaded into the computers of the network of computers on board the aircraft, said software configuration comprising, for each software application, an indication of the version of said software application,
- receiving and analyzing by at least one computer of a ground infrastructure, said software configuration,
- identifying, on the basis of the analysis, software applications for which there exists in the ground infrastructure, a more recent version of the software applications than the version of these software applications loaded onto the network of computers on board the aircraft and included in the software configuration received,
- calculating, by a computer of the ground infrastructure, a new software configuration for the aircraft, on the basis of the software applications identified,
- constructing a set of software applications, integrating the software applications identified as corresponding to a more recent version of a software application loaded into the computers of the network of computers on board the aircraft, said software applications managing the various functional entities of the avionic system,
- loading said set of software applications onto the network of computers on board the aircraft and from the ground infrastructure, so as to obtain the new software configuration on board the aircraft.

2. A method of updating an aircraft according to claim 1, **characterised in that** it further comprises at the end, a step of generating a configuration report attesting the updating of the aircraft.

3. A method of updating an aircraft according to one of claims 1 or 2, **characterised in that** in parallel with the construction of a set of software applications, corresponding updated documentation is established.

4. A method of updating an aircraft according to one of claims 1 to 3, **characterised in that** it employs a communication system comprising means adapted to establish a network connection between a network of computers on board the aircraft and a network of computers on the ground via at least one communication medium.

5. An updating method according to claim 4, **characterised in that** the communication system is a wireless communication system between the aircraft and the network of computers on the ground.

6. An updating method according to one of claims 4 or 5, **characterised in that** the interrogation of the computers of the network of computers on board the aircraft to know the configuration of the software applications loaded into the computers of the network of computers on board the aircraft is carried out remotely using the communication system.

7. An updating method according to one of claims 4 to 6, **characterised in that** the configuration obtained further to the interrogation of the computers of the network of computers on board the aircraft is sent to a computer of the network of computers on the ground by the communication system.

8. An updating method according to one of claims 4 to 7, **characterised in that** the loading of the new configuration onto the computers of the network of computers on board the aircraft is carried out from at least one computer of the network of computers on the ground via the communication system.

9. An updating method according to one of claims 1 to 8, **characterised in that** the analysis of the configuration of the software applications by at least one computer is carried out by a computer external to the aircraft.

10. An updating method according to one of claims 1 to 9, **characterised in that** documentation corresponding to the new configuration loaded onto the network of computers on board the aircraft is loaded on board the aircraft.
